# EUROPEAN PATENT SPECIFICATION

(11) **EP 2 872 757 B1**
(45) Date of publication and mention of the grant of the patent: **04.07.2018**
(21) Application number: 13735328.0
(22) Date of filing: 12.07.2013
(51) Int. Cl.: F02C 3/34, F02C 6/18

(54) **GAS TURBINE POWER PLANT WITH FLUE GAS RECIRCULATION**
GASTURBINENKRAFTWERK MIT RAUCHGASREZIRKULATION
CENTRALE ÉLECTRIQUE À TURBINE À GAZ AVEC RECIRCULATION DE GAZ DE COMBUSTION

(30) Priority: 13.07.2012 EP 12176260
(43) Date of publication of application: 20.05.2015
(73) Proprietor: Ansaldo Energia IP UK Limited, London W1G 9DQ (GB)
(72) Inventor: BENZ, Eribert, CH-5413 Birmenstorf (CH); SANDER, Frank, 33605 Bielefeld (DE); PAYNE, Robin, CH-5430 Wettingen (CH)
(74) Representative: Bernotti, Andrea
(86) International application number: PCT/EP2013/064786
(87) International publication number: WO 2014/009524

(56) References cited:
- EP-A2- 2 072 794
- WO-A1-2010/131941
- US-A- 4 133 171
- US-A- 4 204 401
- US-A- 5 794 431
- US-A1- 2009 053 036
- US-A1- 2009 145 127
- US-A1- 2012 073 260

## Description

### Field of the invention

The invention relates to combined cycle power plant with flue gas recirculation and a method for operating such a power plant.

### Prior art

Flue gas recirculation is known for reduction of NOx emissions and for improvements in carbon capture. When applying flue gas recirculation the NOx emissions of a gas turbine can be reduced due to reduced oxygen content in the combustion air. WO 2010/072 710 discloses a power plant having a gas turbine unit and a steam turbine unit with a steam generator fed with the flue gases of the gas turbine unit. The power plant of WO 2010/072 710 also has a system for partly recirculating the flue gases to the compressor inlet and a CO2 capture unit in a subsequent arrangement.

Further, flue gas recirculation can allow the use of a SCR if the resulting oxygen content in the flue gas is sufficiently low. To reduce the oxygen content of combustion gases a gas turbine plant is proposed in the U.S. 2009/0284013 A1, which comprises a gas turbine, a heat recovery steam generator and a flue gas recirculation. The gas turbine comprises a compressor for air, and a compressor for recirculated flue gas, a burner and a turbine. The heat recovery steam generator is connected to a turbine outlet of the gas turbine boiler at its input side. The heat recovery steam generator comprises two boiler outlets. A chimney is connected to the first boiler outlet. The flue gas recirculation connects to the second boiler outlet with a compressor inlet of the compressor for recirculated flue gas.

This plant allows combustion with a fuel to air ratio λ close to one by reducing the oxygen content in the combustor inlet gas.

Good control of the compressor fresh air flow and the recirculated flue gas flow are difficult. In particular exact the flow measurements in large flow ducts are difficult. Further, the volumes of the intake, the ducts and the boiler are large and lead to a difficult dynamic behavior if different control elements are interacting in the flow paths of the inlet gas and flue gas.

Different gas turbine plants with flue gas recirculation have been disclosed, such as in US4133171. A basic configuration for 50% flue gas recirculation rate is known from the US 2009/145127 A1.

The EP 2 072 794 A2, US 5 794 431 A, WO 2010/131941 A1, and US 4,204,401 A show gas turbine arrangements having an air intake with a flue gas recirculation line joining an intake line in a T-joint. The US 4,204,401 A further discloses a mixing valve at the connection of the two pipes and a throttling element to control the mass flow of the mixture of recirculated flue gas and intake air.

From the US 2012/073260 A1 a gas turbine power plant with two HRSGs is known. The flue gases leaving a first HRSG are recirculated into the compressor, and the flue gases leaving the second HRSG are treated in a catalyst and released to the environment.

### Summary of the invention

One object of the disclosure is to provide a combined cycle power plant with flue gas recirculation and a stable control of the inlet flow as well as a reliable ratio of recirculated flue gas flow and fresh air.

One aspect of the present disclosure is to provide a power plant according to claim 1 comprising a gas turbine with at least a compressor, a combustor and a turbine, as well as a flue gas recirculation for recirculation of a fraction of the gas turbine flue gas to the compressor inlet of the gas turbine. The power plant further comprises a compressor intake with an intake section for fresh air called fresh air intake sector, a recirculated flue gas intake sector, and a common control element for the control of the fresh air flow and of the recirculated flue gas flow, which is arranged in the compressor or in the compressor intake.

Typically the fresh air intake sector and the recirculated flue gas intake sector are in a common housing. At the end close to the compressor intake the fresh air intake sector and the recirculated flue gas intake sector can be arranged concentrically around the axis of the compressor. In one embodiment the fresh air intake sector and the recirculated flue gas intake sector have concentric annular cross sections at their downstream end.

The control of both flows by one common control element is possible if both flows are physically separated or the free flow path between a physical separation and the common control element is too short to allow a significant cross flow from one path to the other or a significant mixing. A significant mixing would be for example a mixing of more than 50% of the two separated flows. To enable control with a common control element the length of the free flow path upstream of a common control element should not be more than about 10 times the average height of the free flow path. According to one exemplary embodiment the length of the free flow path upstream of a common control element is not be more than 5 times the average height of the free flow path. In a further embodiment the length of the free flow path upstream of a common control element smaller than 2 times the average height of the free flow path. The free flow path typically extends from a wall which separates the fresh air and recirculated flue gas flow paths.

According to one exemplary embodiment at least one variable guide vane is arranged in the compressor at the upstream end of the compressor to control the inlet flow in the fresh air intake sector and in the intake sector for recirculated flue gas.

According to another exemplary embodiment at least one movable deflector is arranged in the compressor inlet upstream of the compressor as a control element. The movable deflector extends at least partly into the fresh air intake sector and at least partly into the flue gas intake sector. Such a deflector can comprise an aerodynamic profile like a guide vane.

To assure a recirculation rate within a defined tolerance band over the whole operating range of the gas turbine, the compressor intake can be split into a fresh air intake sector and a flue gas intake sector by an intake baffle plate. In the fresh air sector fresh air can flow to the inlet of the compressor, and in the flue gas intake sector the recirculated flue gas flow can flow to the inlet of the compressor.

The flow areas and geometries of the intake, exhaust system, and flue gas recirculation can be designed such, that the resulting flue gas recirculation rate meets a design target at base load. According to the disclosure the flue gas recirculation rate can be adjusted by changing the location in the intake manifold at which the baffle plate ends, e.g. the distance between a downstream end of the baffle plate and the compressor inlet.

For start-up and low load an operation without flue gas recirculation can be advantageous. Therefore a minimum load for flue gas recirculation can be defined. Such a minimum load from which flue gas recirculation is enabled can be a low load in the order of 5 to 20% relative load (power output relative to the power output at base load); it can also be a higher load of for example 50% relative load or more. Typically, flue gas recirculation is enabled latest above 65% relative load.
Flue gas recirculation can be disabled by different valves or flaps in the flue gas recirculation line. According to one exemplary embodiment the intake comprises a fresh air control element, which connects flue gas intake sector to fresh air and can allow the supply of fresh air to the flue gas intake sector. At low load the gas turbine operates practically without flue gas recirculation once the fresh air control element is open.

Typically a plant with flue gas recirculation can include a heat recovery boiler arrangement. According to a further exemplary embodiment, the power plant comprises a heat recovery boiler arrangement with at least a boiler inlet connected to the turbine outlet, and an outlet side. The outlet side comprises a first exit connected to a stack, and a second exit connected to the flue gas recirculation. The proposed heat recovery boiler arrangement further comprises a first boiler flue gas path from the boiler inlet to the first boiler exit, and a second boiler flue gas path from the boiler inlet to the second boiler exit. The boiler arrangement with two separate flue gas paths has pressure drops in each flow path, which are independent from each other. Due to the independent pressure drops, which are a function of the mass flow and temperature in each flow path, the split boiler arrangement helps to maintain a constant recirculation rate. If the recirculation rate deviates from the design value the pressure drops in the respective flow paths will change correspondingly and thereby counteract a deviation from the design recirculation rate. For example if the recirculation rate is increasing the pressure drop in the second flue gas pass will increase while the pressure trop in the first flue gas path will decrease. This change in pressure drops counteracts the change in recirculation rate and thereby helps to maintain the design recirculation rate.

Further, the split flue gas paths are advantageous for treatment of the flue gases, which are to be released to the environment. For example a CO or NOx catalyzer only needs to be arranged in the first flue gas path thereby reducing the required size.

Permanent flue gas recirculation or permanent flue gas recirculation at high relative load (typically above 50% relative load, where relative load is the load relative to the full load of the gas turbine) allows an optimization of the intake system and stack with related ducting due to the reduced required fresh air flow and reduced flue gas flow discharged. Typically, the design of an intake or stack is determined by a design pressure drop and the intake or stack is dimensioned to stay within the design pressure drop at the maximum flow. Typically the maximum flow is required for base load operation.

According to one exemplary embodiment the fresh air intake sector is designed for a fresh air flow, which is smaller than the base load compressor inlet flow. In particular this allows reducing the size of the intake filter house and filters compared to a conventional design. Conventional gas turbine intakes are designed for the total compressor inlet flow.
In a more specific exemplary embodiment the fresh air intake sector is designed for a fresh air flow of less than 75% of the base load compressor inlet flow. Since flue gas recirculation is restricted to about 50% of the flue gas, about 50% of the intake gas has to be fresh air. Therefore the fresh air intake sector is designed for at least 50% of the base load compressor inlet flow. In cases with very high flue gas recirculation the fresh air intake sector can be designed for at least 40% of the base load compressor inlet flow.

According to one exemplary embodiment of the power plant the stack is designed for a flue gas flow, which is smaller than exhaust flow of the at base load turbine.
In a more specific exemplary embodiment the stack is designed for a flue gas flow of less than 75% of the base load turbine exhaust flow. Since flue gas recirculation is restricted, about 50% of the flue gas flow has to be released to the environment. Therefore the stack is typically designed for at least 50% of the base load flue gas flow. In cases with very high flue gas recirculation it can be designed for at least 40% of the base load flue gas flow.
A significant advantage of the disclosed power plant is the possibility to control the recirculated flow gas without additional flow control elements in the flow path of the flue gas recirculation. According to a preferred exemplary embodiment the flue gas recirculation, which connects an exit of the heat recovery boiler arrangement to the compressor intake is free of any elements with a controllable or adjustable pressure drop. An element with a controllable or adjustable pressure drop is for example a valve, a flap or a damper.

Besides the power plant, a method according to claim 11 for operation of a power plant comprising a gas turbine with at least a compressor, a combustor, a turbine, and a flue gas recirculation for recirculation of part of the gas turbine flue gas to the compressor inlet of the gas turbine is an object of the disclosure.

According to a first embodiment of the method a fresh air flow and a recirculated flue gas flow are introduced into the compressor inlet in separate sectors. However, both the fresh air flow and the recirculated flue gas flow are controlled by a common control element. The absence of additional control elements in the flow path of the recirculated flue gas path and in the fresh air flow path significantly simplifies the control of the plant.

According to a further embodiment of the method, the fresh air flow and the recirculated flue gas flow are controlled by at least one variable compressor guide vane arranged in the compressor at the upstream end of the compressor. For this method it can be advantageous if the fresh air flow and recirculated flue gas flow are physically separated inside the intake up to the vicinity of the variable compressor guide vane, for example up to a distance of less than two times the height of the first variable compressor guide vane.

According to yet another embodiment of the method, the fresh air flow and the recirculated flue gas flow are controlled by at least one adjustable deflector, which is arranged in the compressor inlet upstream of the compressor, and which is extending at least partly into a fresh air intake sector and at least partly into a flue gas intake sector. An adjustable deflector can have the form of a plate or an aerodynamic profile, which is for example pivotable around a swivel axis 34.

For increased operational flexibility it can be advantageous to modify the method such that the method includes opening a fresh air control element during start-up and/or low load operation to allow the supply of fresh air to the flue gas intake sector for operation without flue gas recirculation.

According to an exemplary embodiment of the method the flue gas flow is split into two flows in the heat recovery boiler arrangement (3). A first flow is flowing from the boiler inlet to a first boiler exit, and a second flow is flowing from the boiler inlet to the second boiler exit. The second flow is than recirculated from the second boiler exit into the compressor inlet of the gas turbine, and the first flow is released from the first boiler exit to the environment. Before the first flue gas flow is released to the environment it can be treated for example by a CO and/or NOx catalyzer to reduce the CO and/ or NOx emissions. Further CO2 can be removed from the first flue gas flow for carbon capture.

The above described gas turbine can be a single combustion gas turbine or a sequential combustion gas turbine as known for example from EP0620363 B1 or EP0718470 A2. The disclosed method can be applied to single combustion gas turbine as well as to a sequential combustion gas turbine.

### Brief description of the drawing

The invention, its nature as well as its advantages, shall be described in more detail below with the aid of the accompanying drawings. Referring to the drawings:
Fig. 1 shows a first example of a gas turbine according to the present invention,
Fig. 2 shows an example of the relevant pressures in the intake as a function of relative load.

### Ways of implementing the invention

The same or functionally identical elements are provided with the same designations below. The values and dimensional specifications indicated are only exemplary values and do not constitute any restriction of the invention to such dimensions.

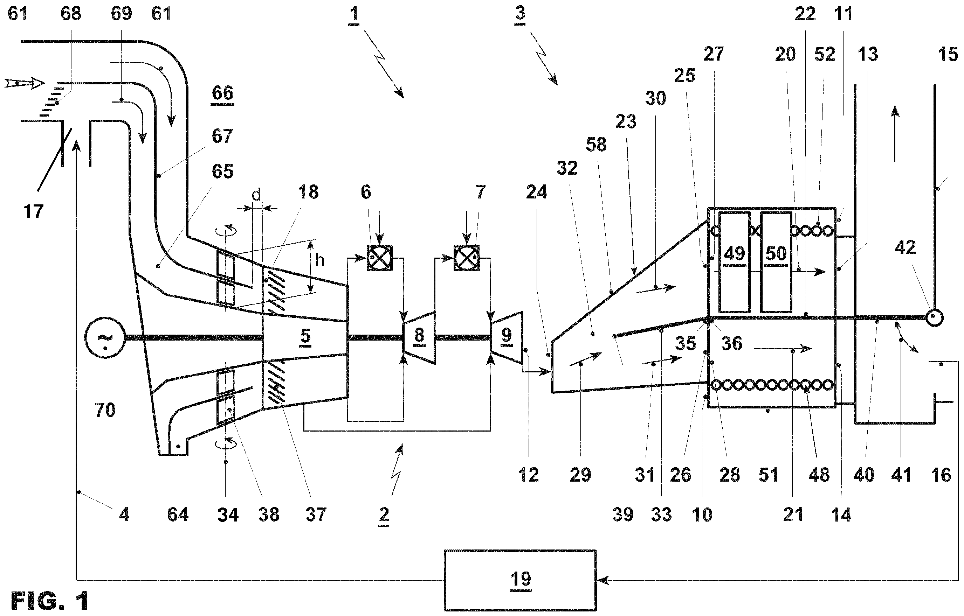

According to Fig. 1 an exemplary gas turbine power plant 1, which can for example be applied in a power plant arrangement for electricity generation, comprises at least a gas turbine 2, at least a heat recovery boiler arrangement 3 as well as at least a flue gas recirculation 4. The gas turbine 2 comprises at least one compressor 5, at least a combustor 6, 7 as well as at least one turbine 8, 9. In the embodiments shown here the gas turbine 2 comprises two turbines 8 and 9, namely a high pressure turbine 8 and a low pressure turbine 9. Accordingly, two combustors 6 and 7 are also provided, namely a high pressure combustor 6 upstream of the high pressure turbine 8 and a low pressure combustor 7 upstream of the low pressure turbine 9. The steam generated in the boiler 3 can be used in a water-steam cycle or for co-generation (not shown).

The heat recovery boiler arrangement 3 has a boiler inlet side 10 and a boiler exit side 11. The boiler inlet side 10 is fluidically connected with a turbine outlet 12 of the low pressure turbine 9. The boiler exit side 11 comprises a first boiler exit 13 and a second boiler exit 14. The first boiler exit 13 is connected with a stack 15. Between the first boiler exit 13 and the stack CO2 capture equipment can be arranged (not shown). The second boiler exit 14 is fluidically connected with an inlet 16 of the flue gas recirculation 4. An outlet 17 of the flue gas recirculation 4 is connected with a compressor inlet 18 of the compressor 5. Therefore the flue gas recirculation 4 connects the second boiler exit 14 with the compressor inlet 18. In the examples a flue gas re-cooler 19 is arranged in the flue gas recirculation 4, which can be designed as a DCC (direct contact cooler), so that the recirculated flue gas can be cooled and be washed at the same time.

In the embodiments shown the heat recovery boiler arrangement 3 comprises a first boiler flue gas path 20, which is indicated by an arrow. The first boiler flue gas path 20 starts at the boiler inlet side 10 and leads to the first boiler exit 13. Further, the heat recovery boiler arrangement 3 comprises a second boiler flue gas path 21, which is also indicated by an arrow. The second boiler flue gas path 21 also starts at the boiler inlet side 10 and leads to the second boiler exit 14. Both boiler flue gas paths 20, 21 are separated and lead to the respective boiler exits 13, 14. For the realization of the separated boiler flue gas paths 20, 21 within the heat recovery boiler arrangement 3 a boiler partition 22 can be arranged in the heat recovery boiler arrangement 3, which fluidically separates both boiler flue gas paths 20, 21.

In the embodiments shown in here a diffuser 23 is arranged upstream of the boiler inlet side 10. The diffuser inlet 24 is connected with the turbine outlet 12. The diffuser 23 comprises a diffuser inlet 24 and at least a diffuser exit 25, 26. In the embodiment of Fig. 1 two diffuser exits, namely the first diffuser exit 25 and the second diffuser exit 26 are shown.

A single, common diffuser exit 25 can also be used. In this case common diffuser exit is fluidically connected with the boiler inlet side 10.

In the embodiment of Fig. 1 the first diffuser exit 25 is fluidically connected with the first boiler inlet 27, while the second diffuser exit 26 is fluidically connected with the second boiler inlet 28. Both boiler inlets 27, 28 are arranged at the boiler inlet side 10. According to the embodiment of Fig. 1 the first boiler flue gas path 20 leads from the first boiler inlet 27 to the first boiler exit 13. In parallel and separately the second boiler flue gas path 21 leads from of the second boiler inlet 28 to the second boiler exit 14.

In the diffuser 23 of Fig. 1 a common diffuser main path 29, which is indicated by an arrow, as well as the first diffuser flue gas path 30 which is indicated by an arrow, and the second diffuser flue gas path 31, which is also indicated by an arrow, are arranged. The common diffuser main path 29 is split into the separated diffuser flue gas paths 30, 31 at a diffusor branching point 32. To separate the diffuser flue gas paths 30, 31 a diffuser partition 33 is arranged in a diffuser housing 58 of the diffuser 23. A leading edge 39 of the diffuser partition 33 defines the diffusor branching point 32. The diffuser partition 33 separates both diffuser flue gas paths 30, 31 from the diffusor branching point 32 up to both diffuser exits 25, 26. In the example of the Fig 1 the diffuser partition 33 and the boiler partition 22 are arranged such that trailing edge 35 of the diffuser partition 33 and a leading edge 36 of the boiler partition 22 adjoin.
By the adjoining the partitions 22, 33 the first diffuser flue gas path 30 passes directly on to the first boiler flue gas path 20, while at the second diffuser flue gas path 31 passes on to the second boiler flue gas path 21.

In the first boiler flue gas path 20 a CO catalyzer 49, catalytic NOx converter 50 and a first heat exchanger array 52 are provided. The catalytic NOx converter 50 is arranged downstream of the CO catalyzer 49. Depending on the temperature and on the design of the catalytic NOx converter 50 a part of the first heat exchanger array 52 can be arranged upstream of the catalytic NOx converter 50 to reduce the flue gas temperature, and the remaining first heat exchanger array 52 can be arranged downstream of the catalytic NOx converter 50.

In the second boiler flue gas path 21 a second heat exchanger array 48 is provided. The first heat exchanger array 52 and second heat exchanger array 48 can be separated arrangements or integrated with at least part of the heat exchanger elements passing from the first to the second boiler flue gas path 21.

As shown in Fig. 1 a control member 40, which is pivotable around a swivel axis 42 as indicated by the arrow 41, can be arranged at the downstream end of the heat recovery boiler arrangement 3. This control member can be used as a bypass for the flue gas recirculation 4 and to allow the second boiler flue gas path 21 to exit via the stack 15.

In the exemplary embodiment the compressor intake is split into two sectors as shown in Fig.1. In the depicted example, the compressor intake 66 is split by means of an intake baffle plate 67 into an outer fresh air intake sector 64 for fresh air 61 and into a flue gas intake sector 65 for recirculated flue gas 69. This splitting of the compressor intake 66 leads to an essentially coaxial inflow of recirculated flue gas and fresh air 61 into the compressor 5. A fresh air control element 68 allows the supply of fresh air to the flue gas intake sector 65 to allow operation with reduced or no flue gas recirculation.

Two alternative common control elements 37, 38 are indicated in Fig. 1. Typically one such control element is sufficient; however a combination of two or more can be used. A variable guide vane 37 can be used as common control element. As shown here, the distance d between the downstream end of the intake baffle plate 67 and the leading edge of the variable guide vane 37 should be in the order of the height h of the variable guide vane 37 or smaller.
The movable deflector 38 can be arranged on a pivotable axis and comprise two deflector sections: one is extending into the intake sector 64 for fresh air 61 and the second extending into the flue gas intake sector 65.

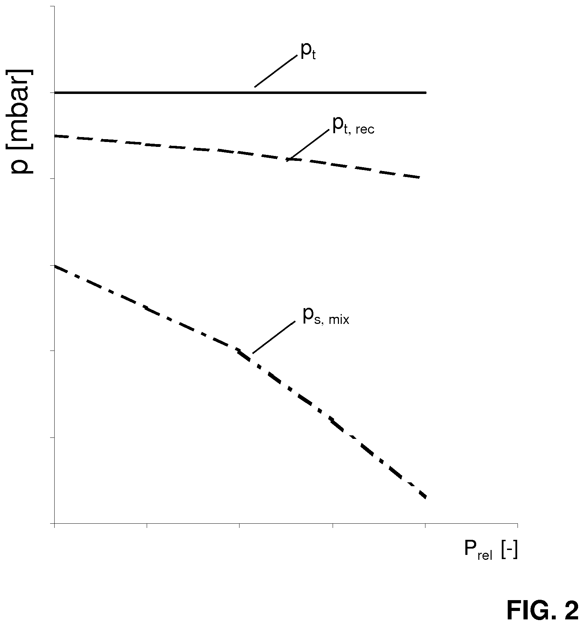

The proposed integrated design with one control element for fresh air and recirculated flue gas has to assure, that over the operating range of the gas turbine 2 the static pressure p_{s,mix} in the mixing plane, where air and flue gas are mixed, is always lower than the total pressure of both flows. An example of the relevant pressures in the intake as a function of relative load is shown in Fig. 2.The total ambient pressure pₜ remains constant. The recirculated flue gas total pressure p_{t, rec} is decreasing over load as the mass flow and thereby the pressure drop in the flue gas recirculation increases. The fresh air total pressure changes proportional to the recirculated flue gas total pressure p_{t, rec} but can be at a different level (not shown). The static pressure at mixing plane p_{s, mix} where fresh air and recirculated flue gas are not physically separated anymore and can mix is also decreasing over load. Due to the decrease in total pressure and the increase in dynamic head (with increasing flow velocity) the static pressure decreases faster than the total pressure. The proper design assures that the difference between the total pressure of the recirculated flue gas and the static pressure in the mixing plane always drives the flue gas into the GT intake. The total pressure of the recirculated flue gas is always below the total pressure of the ambient air due to a higher pressure drop in the flue gas recirculation than in the inlet air filter.

It will be appreciated by those skilled in the art that the present invention can be embodied in other specific forms without departing from the essential characteristics thereof. The presently disclosed embodiments are therefore considered in all respects to be illustrative and not restricted.

### Designations

- 1: Power plant
- 2: Gas turbine
- 3: Heat recovery boiler arrangement
- 4: Flue gas recirculation
- 5: Compressor
- 6: High pressure combustor
- 7: Low pressure combustor
- 8: High pressure turbine
- 9: Low pressure turbine
- 10: inlet side of 3
- 11: outlet side of 3
- 12: turbine outlet
- 13: first boiler exit
- 14: second boiler exit
- 15: stack
- 16: inlet of 4
- 17: outlet of 4
- 18: compressor inlet
- 19: flue gas recirculation cooler
- 20: first boiler flue gas path
- 21: second boiler flue gas path
- 22: boiler partition
- 23: diffusor
- 24: diffusor inlet
- 25: common diffusor outlet/ first diffusor outlet
- 26: second diffusor outlet
- 27: common boiler inlet/first boiler inlet
- 28: second boiler inlet
- 29: diffusor main path
- 30: first diffusor flue gas path
- 31: second diffusor flue gas path
- 32: diffusor branching point
- 33: diffusor partition
- 34: swivel axis
- 35: trailing edge of 33
- 36: leading edge of 22
- 37: variable guide vane
- 38: movable deflector
- 39: leading edge of 33
- 40: control member
- 41: movement direction of 40
- 42: swivel axis of 40
- 48: second heat exchanger array
- 49: CO catalyzer
- 50: Catalytic NOx converter (three-way catalyst, NOx adsorbing catalyst)
- 51: heat recovery boiler
- 52: first heat exchanger array
- 58: diffusor housing
- 61: fresh air
- 64: fresh air intake sector
- 65: flue gas intake sector
- 66: compressor intake
- 67: intake baffle plate
- 68: fresh air control element
- 69: recirculated flue gas
- h: hight
- d: distance
- p: pressure
- pₜ: ambient total pressure
- p_{t, rec}: recirculated flue gas total pressure
- p_{s, mix}: static pressure at mixing plane

## Claims

1. A power plant (1) comprising
a gas turbine (2) with at least a compressor (5), a compressor intake (66), a combustor (6, 7) and a turbine (8, 9),
a flue gas recirculation (4) for recirculation of part of the gas turbine flue gas to the compressor inlet (18) of the gas turbine (2),
**characterized in that**
the compressor intake (66) comprises a fresh air intake sector (64) and a recirculated flue gas intake sector (65),
and **in that** a common control element (37, 38) for the control of the fresh air (61) flow and of the recirculated flue gas (69) flow is arranged in the compressor (5) and/ or in the compressor intake (66) wherein a physical separation is arranged between the fresh air (61) flow and the recirculated flue gas (69) in the compressor intake (66), or wherein the free flow path between a physical separation of the fresh air (61) flow and the recirculated flue gas (69) flow in the compressor intake (66) and the compressor inlet (18) is too short to allow a significant cross flow from one path to the other or a significant mixing.

2. A power plant (1) according to claim 1, **characterized in that** at least one variable guide vane (37) is arranged in the compressor (5) at the upstream end of the compressor (5) to control the inlet flow in the fresh air intake sector (64) and in the flue gas intake sector (65).

3. A power plant (1) according to claim 1 or 2, **characterized in that** at least one movable deflector (38) is arranged in the compressor inlet (66) upstream of the compressor (5) and extending at least partly into the fresh air intake sector (64) and at least partly into the flue gas intake sector (65).

4. A power plant (1) according to one of the preceding claims, **characterized in that** the compressor intake (66) is split into a fresh air intake sector (64) leading fresh air (61) to the inlet of the compressor (5), and a flue gas intake sector (65) leading recirculated flue gas flow (69) to the inlet of the compressor (5) by an intake baffle plate (67).

5. A power plant (1) according to claim 4, **characterized in that** it comprises a fresh air control element (68) to allow the supply of fresh air to the flue gas intake sector (65) to allow operation without flue gas recirculation.

6. A power plant (1) according to one of the preceding claims,
**characterized in that** it comprises a heat recovery boiler arrangement (3).

7. A power plant (1) according to claim 6, **characterized in that** the heat recovery boiler arrangement (3) comprises at least a boiler inlet (10) connected to a turbine outlet (12), and an outlet side with a first exit (13) connected to a stack (15) and a second exit (14) connected to the flue gas recirculation (4),
and **in that** the heat recovery boiler arrangement (3) comprises a first boiler flue gas path (20) from the boiler inlet (10) to the first boiler exit (13), and a second boiler flue gas path (20) from the boiler inlet (10) to the second boiler exit (13).

8. A power plant (1) according to one of the preceding claims,
**characterized in that** the fresh air intake sector (64) is designed for a fresh air (61) flow, which is smaller than the base load compressor inlet flow.

9. A power plant (1) according to one of the preceding claims,
**characterized in that** the stack (15) is designed for a flue gas flow, which is smaller than the base load turbine exhaust flow.

10. A power plant (1) according to claim 7 or 8, **characterized in that** the flow path of the flue gas recirculation (4) extending from an exit of the heat recovery boiler arrangement (3) to the compressor intake (66) is free of any elements with a controllable or adjustable pressure drop.

11. A method for operating a power plant (1) comprising a gas turbine (2) with at least a compressor (5), a compressor intake (66), a combustor (6, 7), a turbine (8, 9), and a flue gas recirculation (4) for recirculation of part of the gas turbine flue gas to the compressor inlet (18) of the gas turbine (2), **characterized in that** a fresh air flow and a recirculated flue gas flow are introduced into the compressor inlet (18) in separate sectors, **in that** both the fresh air flow (61) and the recirculated flue gas flow (69) are controlled by a common control element (37, 38) and **in that** the fresh air flow and the recirculated flue gas flow are physically separated inside the compressor intake (66) or the free flow path between a physical separation and the common control element is too short to allow a significant cross flow from one path to the other or a significant mixing.

12. A method for operating a power plant (1) according to claim 11, **characterized in that** the fresh airflow (61) and the recirculated flue gas flow (69) are controlled by controlling at least one variable compressor guide vane (37) arranged at the upstream end of the compressor (5).

13. A method for operating a power plant (1) according to claim 11 or 12, **characterized in that** the fresh airflow (61) and the recirculated flue gas flow (69) are controlled by controlling at least one adjustable deflector (38), which is arranged in the compressor intake (66) upstream of the compressor (5) and extending at least partly into a fresh air intake sector (64) and at least partly into a flue gas intake sector (65).

14. A method for operating a power plant (1) according to one of the claims 12 to 13, **characterized in that** the flue gas of the turbine (8, 9) is split into two flows in the heat recovery boiler arrangement (3), with a first flow flowing from the boiler inlet (10) to a first boiler exit (13), and a second flow flowing from the boiler inlet (10) to the second boiler exit (14),
wherein the second flow is recirculated from the second boiler exit into the compressor inlet of the gas turbine (2), and wherein the first flow is released from the first boiler exit (13) to the environment.

## Patentansprüche

1. Kraftwerk, umfassend
eine Gasturbine (2) mit mindestens einem Verdichter (5), einer Verdichteransaugung (66), einer Brennkammer (6, 7) und einer Turbine (8, 9);
eine Rauchgasrezirkulation (4) zur Rezirkulation eines Teils des Gasturbinen-Rauchgases zu dem Verdichtereinlass (18) der Gasturbine (2),
**dadurch gekennzeichnet, dass** die Verdichteransaugung (66) einen Frischlufteinlassbereich (64) und einen Einlassbereich (65) für das rezirkulierte Rauchgas umfasst und dass der Verdichter (5) und/oder die Verdichteransaugung (66) mit einem gemeinsamen Steuerelement (37, 38) zur Steuerung des Frischluftstromes (61) und des Rezirkulations-Rauchgasstromes (69) versehen ist,
wobei in der Verdichteransaugung (66) zwischen dem Frischluftstrom (61) und dem Rezirkulations-Rauchgasstrom (69) eine physische Trennung vorgesehen ist oder der freie Strömungsweg zwischen einer physischen Trennung des Frischluftstromes (61) und des Rezirkulations-Rauchgasstromes (69) in der Verdichteransaugung (66) und dem Verdichtereinlass (18) zu kurz ist, als dass eine signifikante Querströmung von einem Weg zu dem anderen oder eine signifikante Vermischung auftreten kann.

2. Kraftwerk (1) nach Anspruch 1, **dadurch gekennzeichnet, dass** in dem Verdichter (5) an dem anströmseitigen Ende des Verdichters (5) mindestens eine verstellbare Leitschaufel (37) zur Steuerung der Einlassströmung in den Frischlufteinlassbereich (64) und den Rauchgaseinlassbereich (65) vorgesehen ist.

3. Kraftwerk (1) nach Anspruch 1 oder 2, **dadurch gekennzeichnet, dass** in dem Verdichtereinlass (66) anströmseitig des Verdichters (5) mindestens ein beweglicher Ablenker (38) vorgesehen ist, der sich mindestens teilweise in den Frischlufteinlassbereich (64) und mindestens teilweise in den Rauchgaseinlassbereich (65) erstreckt.

4. Kraftwerk (1) nach einem der vorstehenden Ansprüche 1 bis 4, **dadurch gekennzeichnet, dass** der Verdichtereinlass (66) durch ein Einlassleitblech (67) in einen Frischlufteinlassbereich (64), der Frischluft (61) zu dem Einlass des Verdichters leitet, und einen Rauchgaseinlassbereich (65), der den rezirkulierten Rauchgasstrom (69) zu dem Einlass des Verdichters (59 leitet, unterteilt ist.

5. Kraftwerk (1) nach Anspruch 4, **dadurch gekennzeichnet, dass** das Kraftwerk ein Frischluft-Steuerelement (68) umfasst, so dass dem Rauchgaseinlassbereich (65) Frischluft zugeführt werden kann, um einen Betrieb ohne Rauchgasrezirkulation zu ermöglichen.

6. Kraftwerk (1) nach einem der vorstehenden Ansprüche, **dadurch gekennzeichnet, dass** das Kraftwerk eine Abhitzekesselanordnung (3) umfasst.

7. Kraftwerk (1) nach Anspruch 6, **dadurch gekennzeichnet, dass** die Abhitzekesselanordnung (3) mindestens einen mit einem Turbinenaustritt (12) verbundenen Kesseleinlass (10) umfasst sowie eine Auslassseite mit einem ersten Auslass (13), der mit einem Kamin (15) verbunden ist, und einem zweiten Auslass (14), der mit der Rauchgasrezirkulation (4) verbunden ist, und dass die Abhitzekesselanordnung (3) einen ersten Kesselrauchgasweg (20) vom Kesseleinlass (10) zum ersten Kesselauslass (13) und einen zweiten Kesselrauchgasweg (20) vom Kesseleinlass (10) zum zweiten Kesselauslass (14) umfasst.

8. Kraftwerk (1) nach einem der vorstehenden Ansprüche, **dadurch gekennzeichnet, dass** der Frischlufteinlassbereich (64) für einen Frischluftstrom (61) ausgelegt ist, der kleiner ist als der Verdichtereinlassstrom der Grundlast.

9. Kraftwerk (1) nach einem der vorstehenden Ansprüche, **dadurch gekennzeichnet, dass** der Kamin (15) für einen Rauchgasstrom (61) ausgelegt ist, der kleiner ist als der Turbinen-Abgasstrom der Grundlast.

10. Kraftwerk (1) nach Anspruch 7 oder 8, **dadurch gekennzeichnet, dass** der sich von einem Auslass der Abhitzekesselanordnung (3) zu der Verdichteransaugung (66) erstreckende Strömungsweg der Rauchgasrezirkulation (4) frei von Elementen mit einem steuerbaren oder einstellbarem Druckabfall ist.

11. Verfahren zum Betrieb eines Kraftwerks (1), umfassend eine Gasturbine (2) mit mindestens einem Verdichter (5), einer Verdichteransaugung (66), einer Brennkammer (6, 7) und einer Turbine (8, 9) sowie
eine Rauchgasrezirkulation (4) zur Rezirkulation eines Teils des Gasturbinen-Rauchgases zu dem Verdichtereinlass (18) der Gasturbine (2),
**dadurch gekennzeichnet, dass** in den Verdichtereinlass (18) in getrennte Bereiche ein Frischluftstrom und ein Rezirkulations-Rauchgasstrom eingelassen werden, dass der Frischluftstrom (61) und der Rezirkulations-Rauchgasstrom (69) durch ein gemeinsames Steuerelement (37, 38) gesteuert werden und dass der Frischluftstrom und der Rezirkulations-Rauchgasstrom im Innern der Verdichteransaugung (66) physisch getrennt werden oder dass der freie Strömungsweg zwischen einer physischen Trennung und dem gemeinsamen Steuerelement zu kurz ist, als dass eine signifikante Querströmung von einem Weg zu dem anderen oder eine signifikante Vermischung auftreten kann.

12. Verfahren zum Betrieb eines Kraftwerks (1) nach Anspruch 11, **dadurch gekennzeichnet, dass** der Frischluftstrom (61) und der Rezirkulations-Rauchgasstrom (69) durch die Steuerung mindestens einer an dem anströmseitigen Ende des Verdichters (5) vorgesehenen verstellbaren Verdichter-Leitschaufel (37) gesteuert werden.

13. Verfahren zum Betrieb eines Kraftwerks (1) nach Anspruch 11 oder 12, **dadurch gekennzeichnet, dass** der Frischluftstrom (61) und der Rezirkulations-Rauchgasstrom (69) durch die Steuerung mindestens eines verstellbaren Ablenkers (38) gesteuert werden, der in der Verdichteransaugung (66) anströmseitig des Verdichters angeordnet ist und sich mindestens teilweise in einen Frischlufteinlassbereich (64) und mindestens teilweise in einen Rauchgaseinlassbereich (65) erstreckt.

14. Verfahren zum Betrieb eines Kraftwerks (1) nach einem der vorstehenden Ansprüche 12 bis 13, **dadurch gekennzeichnet, dass** das Rauchgas der Turbine (8, 9) in der Abhitzekesselanordnung (3) in zwei Ströme getrennt wird, wobei ein erster Strom von dem Kesseleinlass (10) zu einem ersten Kesselauslass (13) fließt und ein zweiter Strom von dem Kesseleinlass 810) zu dem zweiten Kesselauslass (14),
wobei der zweite Strom von dem zweiten Kesselauslass in den Verdichtereinlass der Gasturbine (2) rückgeführt wird und der erste Strom von dem ersten Kesselauslass (13) in die Umgebung abgegeben wird.

## Revendications

1. Centrale électrique (1) comprenant :
une turbine à gaz (2) avec au moins un compresseur (5), une entrée de compresseur (66), une chambre de combustion (6, 7) et une turbine (8, 9) ;
un dispositif de recyclage des gaz de combustion (4) destiné à recycler une partie des gaz de combustion de la turbine à gaz, vers l'entrée du compresseur (18) de la turbine à gaz (2) ;
**caractérisée en ce que** :
l'admission du compresseur (66) comprend un secteur admission d'air frais (64) et un secteur admission des gaz de combustion recyclés (65), et **en ce que** :
un élément de commande commun (37, 38) destiné à commander le flux d'air frais (61) et le flux des gaz de combustion recyclés (69), est agencé dans le compresseur (5) et / ou dans l'admission du compresseur (66), dans lequel une séparation physique est agencée entre le flux d'air frais (61) et le flux des gaz de combustion recyclés (69) dans l'admission du compresseur (66), ou dans lequel le chemin d'écoulement libre entre une séparation physique du flux d'air frais (61) et du flux des gaz de combustion recyclés (69) dans l'admission du compresseur (66), et l'entrée du compresseur (18), est trop court pour permettre un écoulement transversal significatif d'un chemin à l'autre, ou un mélange significatif.

2. Centrale électrique (1) selon la revendication 1, **caractérisée en ce qu'**une aube directrice variable (37) au moins est agencée dans le compresseur (5) au niveau de l'extrémité amont du compresseur (5), de façon à commander le flux d'entrée dans le secteur admission d'air frais (64) et dans le secteur admission des gaz de combustion (65).

3. Centrale électrique (1) selon la revendication 1 ou la revendication 2, **caractérisée en ce qu'**un déflecteur mobile (38) au moins est agencé dans l'entrée du compresseur (66) en amont du compresseur (5), et s'étend en partie au moins dans le secteur admission d'air frais (64), et en partie au moins dans le secteur admission des gaz de combustion (65).

4. Centrale électrique (1) selon l'une quelconque des revendications précédentes, **caractérisée en ce que** l'admission du compresseur (66) est scindée en un secteur admission d'air frais (64) qui conduit le flux d'air frais (61) vers l'entrée du compresseur (5), et en un secteur admission des gaz de combustion (65) qui conduit le flux des gaz de combustion recyclés (69) vers l'entrée du compresseur (5), par un déflecteur d'admission (67).

5. Centrale électrique (1) selon la revendication 4, **caractérisée en ce qu'**elle comprend un élément de commande d'air frais (68) destiné à permettre l'approvisionnement en air frais du secteur admission des gaz de combustion (65), de façon à permettre un fonctionnement sans dispositif de recyclage des gaz de combustion.

6. Centrale électrique (1) selon l'une quelconque des revendications précédentes, **caractérisée en ce qu'**elle comprend un agencement de chaudière à récupération de chaleur (3).

7. Centrale électrique (1) selon la revendication 6,
**caractérisée en ce que** l'agencement de chaudière à récupération de chaleur (3) comprend au moins une entrée de chaudière (10) connectée à une sortie de turbine (12), et un côté sortie avec une première sortie (13) connectée à une cheminée (15), et avec une seconde sortie (14) connectée au dispositif de recyclage des gaz de combustion (4) ;
et **en ce que** l'agencement de chaudière à récupération de chaleur (3) comprend un premier chemin des gaz de combustion de la chaudière (20) qui va de l'entrée de la chaudière (10) jusqu'à la première sortie de la chaudière (13), et un second chemin des gaz de combustion de la chaudière (20) qui va de l'entrée de la chaudière (10) jusqu'à la seconde sortie de la chaudière (13).

8. Centrale électrique (1) selon l'une quelconque des revendications précédentes, **caractérisée en ce que** le secteur admission d'air frais (64) est conçu pour un flux d'air frais (61), qui est plus petit que le flux d'entrée du compresseur de charge de base.

9. Centrale électrique (1) selon l'une quelconque des revendications précédentes, **caractérisée en ce que** la cheminée (15) est conçue pour un flux de gaz de combustion, qui est plus petit que le flux de sortie de la turbine de charge de base.

10. Centrale électrique (1) selon la revendication 7 ou la revendication 8, **caractérisé en ce que** le chemin d'écoulement du dispositif de recyclage des gaz de combustion (4) qui s'étend à partir d'une sortie de l'agencement de chaudière à récupération de chaleur (3) jusqu'à l'admission du compresseur (66), ne contient aucun élément qui présente une chute de pression qui peut être commandée ou réglée.

11. Procédé destiné à actionner une centrale électrique (1) qui comprend une turbine à gaz (2) avec au moins un compresseur (5), une admission de compresseur (66), une chambre de combustion (6, 7), une turbine (8, 9), et un dispositif de recyclage des gaz de combustion (4) destiné à recycler une partie des gaz de combustion de la turbine à gaz vers l'entrée du compresseur (18) de la turbine à gaz (2),
**caractérisé en ce qu'**un flux d'air frais et un flux de gaz de combustion recyclés, sont introduits dans l'entrée du compresseur (18) dans des secteurs distincts ;
**en ce que** le flux d'air frais (61) et le flux de gaz de combustion recyclés (69), sont commandés par un élément de commande commun (37, 38) ;
et **en ce que** le flux d'air frais et le flux de gaz de combustion recyclés sont séparés de manière physique à l'intérieur de l'admission du compresseur (66), ou le chemin d'écoulement libre entre une séparation physique et l'élément de commande commun, est trop court pour permettre un écoulement transversal significatif d'un chemin à l'autre, ou un mélange significatif.

12. Procédé destiné à actionner une centrale électrique (1) selon la revendication 11, **caractérisé en ce que** le flux d'air frais (61) et le flux de gaz de combustion recyclés (69) sont commandés en commandant au moins une aube directrice variable du compresseur (37) agencée au niveau de l'extrémité amont du compresseur (5).

13. Procédé destiné à actionner une centrale électrique (1) selon la revendication 11 ou la revendication 12, **caractérisé en ce que** le flux d'air frais (61) et le flux de gaz de combustion recyclés (69) sont commandés en commandant au moins un déflecteur réglable (38), qui est agencé dans l'admission du compresseur (66) en amont du compresseur (5) et qui s'étend en partie au moins dans un secteur admission d'air frais (64), et en partie au moins dans un secteur admission des gaz de combustion (65).

14. Procédé destiné à actionner une centrale électrique (1) selon la revendication 12 ou la revendication 13,
**caractérisé en ce que** les gaz de combustion de la turbine (8, 9) sont scindés en deux flux dans l'agencement de chaudière à récupération de chaleur (3), un premier flux s'écoulant à partir de l'entrée de la chaudière (10) vers une première sortie de la chaudière (13), et un second flux s'écoulant à partir de l'entrée de la chaudière (10) vers la seconde sortie de la chaudière (14) ;
dans lequel le second flux est recyclé à partir de la seconde sortie de la chaudière dans l'entrée du compresseur de la turbine à gaz (2) ; et
dans lequel le premier flux est libéré dans l'environnement à partir de la première sortie de la chaudière (13).
